# FASCICULE DE BREVET EUROPEEN

(11) **EP 3 105 036 B1**
(45) Date de publication et mention de la délivrance du brevet: **14.03.2018**
(21) Numéro de dépôt: 15705653.2
(22) Date de dépôt: 23.01.2015
(51) Int. Cl.: B29C 49/78, B29C 49/58, B29C 49/06, B29C 49/12, B29C 49/36, B29C 49/42, B29C 49/48, B29C 49/64, B29K 667/00, B29L 31/00

(54) **PROCÉDÉ ET DISPOSITIF DE FABRICATION DE RÉCIPIENTS À PARTIR D'ÉBAUCHES, AVEC DÉTECTION DE DÉFAUTS D'OUVERTURE D'ÉLECTROVANNES**
VERFAHREN UND VORRICHTUNG ZUR HERSTELLUNG VON BEHÄLTERN AUS VORFORMLINGE MIT ERKENNUNG VON DEFEKTEM ÖFFNEN VON ELEKTROVENTILEN
METHOD AND DEVICE FOR MANUFACTURING CONTAINERS FROM PREFORMS, WITH DETECTION OF DEFECTIVE OPENING OF ELECTROVALVES

(30) Priorité: 12.02.2014 FR 1451098
(43) Date de publication de la demande: 21.12.2016
(73) Titulaire: Sidel Participations, 76930 Octeville-sur-Mer (FR)
(72) Inventeur: GENDRE, Julien, 76930 Octeville-sur-Mer (FR)
(74) Mandataire: Grassin d'Alphonse, Emmanuel Jean Marie
(86) Numéro de dépôt international: PCT/FR2015/050165
(87) Numéro de publication internationale: WO 2015/121557

(56) Documents cités:
- DE-A1- 10 153 045
- US-A1- 2010 176 528
- US-A1- 2010 204 819

## Description

L'invention concerne la fabrication de récipients en matière plastique à partir d'ébauches de récipients, qui sont soit des préformes soit des récipients intermédiaires, par formage à l'aide d'un fluide.

L'invention concerne plus particulièrement un procédé de fabrication de récipients en matériau plastique, tel que du PET, par soufflage ou étirage soufflage, dans un moule, d'ébauches avec un fluide sous pression, en particulier de l'air, du type dans lequel la machine de fabrication comporte un système de commande, un four de conditionnement thermique et une unité de soufflage comprenant plusieurs postes de soufflage, chaque poste comportant un moule, dans lequel les ébauches sont introduites, en provenance du four, chacune afin de subir une opération de transformation en récipient lors d'une étape de soufflage, complétée par ou précédée d'étapes intermédiaires, telles qu'une étape de présoufflage, associée parfois à un étirage, une étape de récupération de fluide et une étape de dégazage.
Les documents DE10153045A1, US2010/176528A1 et US2010/204819A1 décrivent des procédés et des installations apparentées.

La fabrication de récipients, tels que des bouteilles, en matière plastique par soufflage d'ébauches est bien connue.

Avant d'être soufflée pour être conformée en récipient, l'ébauche subit un traitement thermique approprié dans un four de conditionnement thermique. Ce traitement thermique peut être plus ou moins sophistiqué en fonction des caractéristiques du récipient à obtenir. Il consiste en tous les cas à chauffer la matière plastique de l'ébauche à une température supérieure à sa température de transition vitreuse pour permettre sa déformation par soufflage ou par étirage soufflage.

L'ébauche est ensuite placée dans un moule contenant une cavité à l'empreinte du récipient à obtenir puis, au cours de l'étape de soufflage, un fluide de soufflage, généralement de l'air sous haute pression (typiquement entre 18 et 40 bars), est injecté à l'aide d'une tuyère dans l'ébauche pour la gonfler et plaquer la matière le long des parois du moule, ce qui permet d'obtenir le récipient.

De préférence, l'opération de transformation peut inclure une étape d'étirage (encore appelée étape d'élongation) de l'ébauche à l'aide d'une tige d'élongation qui est associée au moule et est commandée en coulissement vers le fond de l'ébauche et/ou une étape de présoufflage (typiquement à une pression entre 8 et 15 bars). Après un certain temps de contact de la matière plastique contre le moule, lors d'une étape de dégazage, on ramène la pression dans le récipient à la pression atmosphérique avant d'évacuer le récipient final du moule. Dans d'autres procédés, l'étape de dégazage est précédée d'une étape de recyclage d'une partie du fluide contenu dans le récipient, afin de le réinjecter vers d'autres utilisations (dans la machine elle-même ou dans l'usine où la machine est installée).

Le fonctionnement d'une machine de soufflage est relativement complexe notamment en raison du nombre important de paramètres susceptibles d'influencer la qualité des récipients obtenus.

La mise au point de la machine est effectuée par un technicien qui procède à des essais, en agissant sur les différents paramètres de fonctionnement de la machine, jusqu'à obtenir une qualité de récipient correcte en sortie de machine. C'est en particulier au cours de la mise au point qu'il est déterminé si l'opération de transformation devra comporter une étape d'étirage et/ou une étape de présoufflage, de même que le séquencement des instants de départ des diverses étapes mises en oeuvre.

Si la qualité des récipients est correcte lors de la mise au point initiale de la machine, les réglages effectués par le technicien peuvent toutefois être remis en cause au cours du fonctionnement de la machine en production.

Cette remise en cause peut intervenir lorsque des paramètres externes ou internes à la machine évoluent, par exemple lorsque les conditions ambiantes de température ou de pression changent, ou en raison de l'usure de certains éléments de la machine, ou bien encore lorsque des paramètres caractéristiques des ébauches (tels que viscosité intrinsèque, qualité de la résine, humidité reprise par la matière, température initiale) changent en cours de production pour diverses raisons.

Ces phénomènes, lorsqu'ils ne sont pas détectés, peuvent entraîner des dérives de qualité, voire conduire à la perte de récipients.

Dans un contexte de production industrielle où les cadences de fabrication atteignent plusieurs milliers de récipients par heure et par moule, il est aisément concevable que des dérives de fabrication ou des pertes peuvent avoir des conséquences financières significatives.

Il est connu (cf. le document WO2008/081107 au nom de la demanderesse) de corréler des points singuliers d'une courbe réelle de soufflage avec des paramètres machine (notamment le débit ou la pression de présoufflage), et d'appliquer des corrections des paramètres en fonction de divergences constatées en ces points singuliers.

Toutefois, certaines dérives ne peuvent être corrigées que dans une certaine mesure. En effet, une ou des dérives occasionnées par la détérioration ou le vieillissement, prématuré ou pas, d'un ou de plusieurs organes mécaniques présents dans la machine et qui sont essentiels au déroulement du procédé de fabrication ne peuvent pas être corrigées, ou seulement n'être corrigées que dans une certaine mesure, par le procédé de régulation décrit dans le document WO2008/081107 précédemment cité. Ce peut être le cas de la détérioration ou du vieillissement d'électrovannes présentes dans la machine ou encore de la détérioration par obturation de silencieux de remise à l'air libre lors du dégazage.

Une machine comprend ordinairement des stations, encore appelées postes de soufflage, avec des moules montés à la périphérie d'un carrousel tournant.

Dans les machines connues de soufflage ou d'étirage soufflage, chaque station ou poste de soufflage est agencé pour que l'intérieur du corps creux constitué par l'ébauche, au début de la séquence, puis par le récipient formé, à la fin, puisse être mis en communication dans une première étape avec un circuit de présoufflage, puis dans une seconde étape avec un circuit de soufflage, ensuite éventuellement avec un circuit de récupération de fluide de soufflage et enfin avec un circuit de dégazage (encore appelé circuit d'échappement) pour remettre l'intérieur du volume du récipient à la pression atmosphérique.

La mise en communication de l'intérieur de l'ébauche, respectivement des récipients, avec les circuits de présoufflage, de soufflage, le cas échéant de récupération, et enfin de dégazage est effectuée à l'aide d'électrovannes respectives qui, par convention seront nommées électrovannes de présoufflage, électrovannes de soufflage, électrovannes de récupération, et électrovannes de dégazage (ou d'échappement). Des silencieux d'échappement, qui permettent de réduire le bruit dû à la détente lors de la remise de l'intérieur du récipient à la pression atmosphérique, sont en général associés à chaque circuit d'échappement (un silencieux par circuit).

L'invention vise notamment à remédier aux inconvénients des dispositifs connus, en proposant un procédé permettant d'informer qu'une détérioration ou un vieillissement d'au moins une électrovanne est trop avancé pour pouvoir être corrigé par le procédé de régulation tel que précédemment cité.

L'invention vise également à maîtriser la durée de vie des électrovannes en permettant de programmer des opérations de maintenance pour prévenir tout arrêt de la machine et, ainsi, en optimiser le rendement.

A cet effet, il est proposé un procédé de fabrication de récipients par soufflage dans un moule d'ébauches en matière plastique, comprenant, lors de la fabrication d'un récipient :
- une étape d'introduction d'une ébauche dans un moule ;
- au moins une étape de mise en communication de l'intérieur de l'ébauche avec au moins un circuit de fluide par l'intermédiaire d'une électrovanne associée au dit circuit ;
- à un instant prédéterminé, dénommé top d'ouverture électrovanne, envoyer un ordre d'ouverture à ladite électrovanne qui possède un délai théorique d'ouverture, c'est-à dire un temps qui doit théoriquement s'écouler entre le top d'ouverture et l'instant où l'électrovanne s'ouvre effectivement ;
ce procédé comprenant des étapes consistant à :
- calculer le délai effectif d'ouverture de ladite électrovanne, c'est-à-dire le temps écoulé entre le top d'ouverture et un instant effectif d'ouverture de l'électrovanne ;
- calculer un écart entre le délai effectif d'ouverture et le délai théorique d'ouverture ;
- si l'écart calculé est supérieur à un écart maximal admissible, émettre une notification de dépassement d'écart maximal admissible.

Ainsi, en détectant des écarts excessifs d'ouverture, en d'autres termes des dérives de fonctionnement par rapport à des valeurs de référence, le procédé permet d'assurer un fonctionnement optimal des machines sur lesquelles il est mis en oeuvre, réduisant les pertes de production.

Selon divers modes de réalisations:
- l'instant effectif d'ouverture de l'électrovanne est déterminé en détectant une variation de pression survenant dans l'ébauche ou le récipient en formation après que le top d'ouverture ait été donné ;
- l'instant effectif d'ouverture de l'électrovanne est déterminé en détectant la survenance d'un choc lorsqu'un clapet contenu dans l'électrovanne arrive en butée ;
- l'instant effectif d'ouverture de l'électrovanne est déterminé en détectant le mouvement d'un clapet ou d'un tiroir de commande de l'électrovanne.

De préférence, le procédé comprend une étape consistant à déterminer s'il existe une récurrence de dépassements d'écart maximal admissible avant d'émettre la notification.

Dans des variantes :
- le procédé comprend des étapes consistant à mémoriser une pluralité d'écarts calculés pour ladite électrovanne, puis calculer une moyenne à partir desdits écarts mémorisés et, si la moyenne calculée est supérieure à un écart maximal admissible, émettre ladite notification de dépassement d'écart maximal admissible.
- le procédé comprend des étapes consistant à mémoriser une pluralité d'écarts calculés pour une électrovanne, puis calculer un écart type à partir desdits écarts mémorisés et, si l'écart type calculé est supérieur à un écart maximal admissible, émettre ladite notification de dépassement d'écart maximal admissible.

Il est également proposé un dispositif pour la mise en oeuvre d'un procédé tel que présenté ci-dessus, ce dispositif comportant au moins un moule de soufflage, et des moyens d'introduction d'une ébauche dans ledit moule ;
- au moins un circuit de fluide comportant au moins une électrovanne pour mettre en communication l'intérieur de l'ébauche avec ledit circuit ;
- des moyens pour envoyer un ordre d'ouverture à ladite électrovanne ;
- des moyens de détection de l'instant effectif d'ouverture de l'électrovanne ;
- des moyens de calcul d'un écart entre l'instant effectif d'ouverture et un instant théorique d'ouverture ;
- des moyens d'émission d'une notification de dépassement d'écart maximal admissible si l'écart calculé est supérieur à un écart maximal admissible.

Dans certaines mises en oeuvre, le dispositif comporte au moins un circuit de présoufflage relié à au moins un moule par au moins une électrovanne de présoufflage et/ou au moins un circuit de soufflage relié à au moins un moule par au moins une électrovanne de soufflage et/ou au moins un circuit de récupération relié à au moins un moule par au moins une électrovanne de récupération et/ou au moins un circuit de dégazage relié à au moins un moule par au moins une électrovanne de dégazage.

D'autres caractéristiques et avantages de l'invention apparaitront à la lueur de la description faite ci-après en référence aux dessins annexés dans lesquels :
- la figure 1 est une vue schématique d'une machine de fabrication de récipients ;
- la figure 2 est une vue schématique en coupe d'un poste de soufflage au sein de la machine de la figure 1 ;
- la figure 3 représente une courbe illustrant les différentes variations de pression régnant dans une ébauche au cours de la fabrication d'un récipient.

Dans la suite de la description, les termes "haut", "bas", "horizontal", "vertical", "avant", "arrière" et les termes dérivés "haute", "basse", etc. sont utilisés par souci de clarté en référence à l'orientation des figures sans que ceci n'ait une quelconque portée limitative.

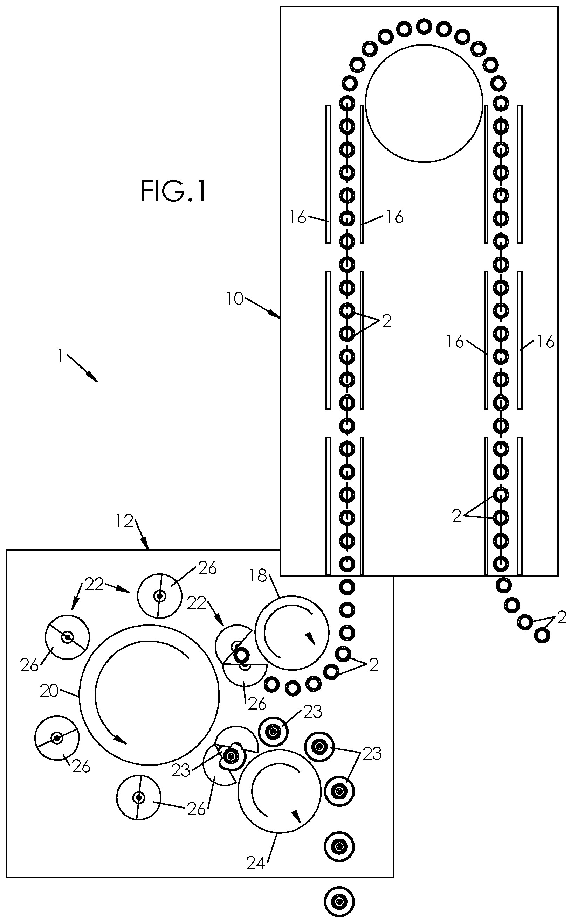

Sur la figure 1 est illustrée schématiquement une machine **1** pour la fabrication de récipients à partir d'ébauches en matière thermoplastique et plus particulièrement en PET (polyéthylène téréphtalate).

Les ébauches **2**, ici des préformes, comportent un fond fermé, dont la forme est généralement hémisphérique, un corps cylindrique et un col à la forme définitive de celui du récipient à obtenir (qui en général ne subit pas la moindre déformation pendant la fabrication du récipient).

La machine **1** de fabrication comprend un four **10** et une unité **12** de formage.

Le four **10** a pour fonction de chauffer les préformes **2** à une température supérieure ou égale à la transition vitreuse du matériau constitutif, par exemple supérieure à 80°C lorsque ce matériau est du PET.

Le four **10** comprend un convoyeur (illustré schématiquement) pour transporter les préformes **2** en les faisant tourner sur elles-mêmes, et des émetteurs **16** de rayonnement, tels que des lampes infrarouge faisant face à des réflecteurs ou des sources laser, pour chauffer les préformes **2**.

Les préformes **2** entrent dans le four **10**, montées sur le convoyeur qui effectue un trajet en forme de U. Elles sont chauffées au défilé par les émetteurs **16.** Les émetteurs **16** et les réflecteurs, le cas échéant, sont placés d'un côté ou de part et d'autre des préformes **2** par rapport à leur sens de défilement.

Les préformes chaudes sont extraites du four **10** et transférées dans des moules de l'unité **12** de formage par un premier dispositif **18** de transfert, tel qu'une roue de transfert, interposé entre le four **10** et l'unité **12** de formage. La roue de transfert comprend des bras (non représentés, car connus en soi) qui viennent saisir successivement les préformes **2**, après leur sortie du four **10**, au niveau de leur col, pour les introduire chacune leur tour dans un moule **26** de l'unité **12** de formage.

L'unité **12** de formage comprend un carrousel **20** tournant à la périphérie duquel sont disposés plusieurs postes **22** de soufflage.

Chaque poste **22** de soufflage comprend au moins un moule **26** qui se compose usuellement de trois parties, soit deux demi-moules **26A**, **26B** et un fond de moule **26C**, qui définissent la cavité de fabrication du récipient.

Chaque préforme **2** chaude sortant du four **10** est introduite dans un moule **26** du poste **22** de soufflage pour y être soufflée et transformée en récipient **23**. Une fois achevé, le récipient **23** est extrait du poste **22** de soufflage par un second dispositif **24** de transfert, similaire au premier dispositif **18** de transfert, et bien connu de l'homme du métier.

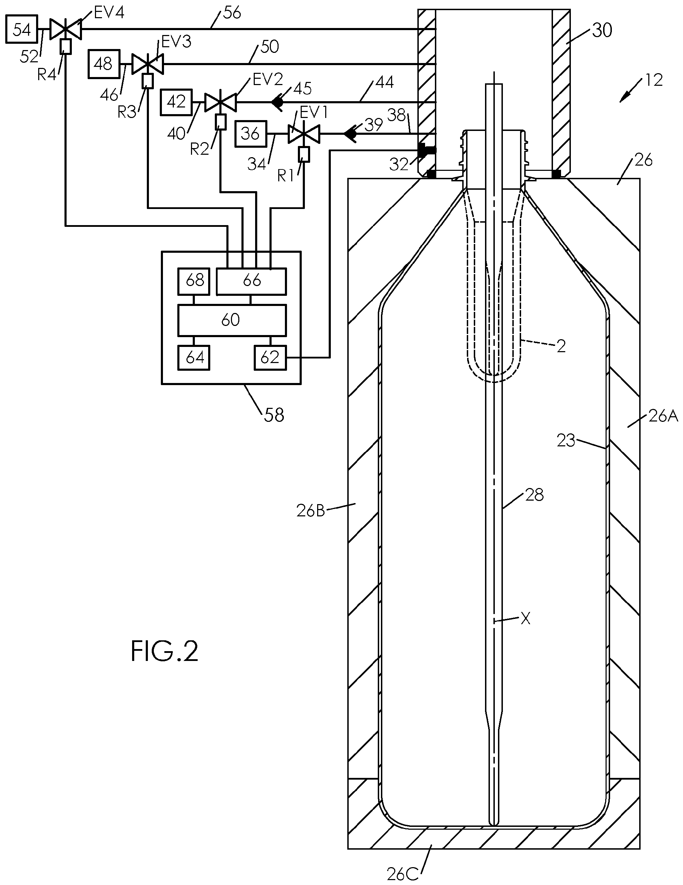

Sur la figure 2 est détaillé un poste **22** de soufflage. Il comprend :
- un moule **26**, en acier ou alliage d'aluminium, constitué de deux demi-moules **26A**, **26B** et d'un fond **26C** de moule, définissant une cavité dont le pourtour a la forme du récipient **23** final produit. Le moule **26** est destiné à recevoir successivement des ébauches **2** chaudes provenant du four **10**,
- une tige **28** d'élongation montée mobile suivant l'axe **X** principal du moule **26**, entre une position haute permettant l'introduction d'une ébauche **2** dans le moule **26** lorsque celui-ci est ouvert et une position basse où l'extrémité de la tige **28** est en contact avec le fond de moule. Le passage de la position haute à la position basse est réalisé pour étirer la matière axialement suivant l'axe **X**,
- une tuyère **30** de soufflage, montée mobile entre une position haute lors de l'introduction de l'ébauche **2** et une position basse où l'extrémité inférieure de cette tuyère **30** vient coiffer l'ébauche **2** de manière étanche afin d'amener l'air de soufflage dans l'ébauche **2** pour venir plaquer la matière plastique contre les parois du moule **26.** La tige **28** d'élongation coulisse dans la tuyère **30**,
- un capteur **32** de pression, débouchant dans la tuyère **30** pour y effectuer une mesure de la pression régnant dans le volume fermé constitué par la tuyère **30** et l'ébauche **2** pendant l'opération de soufflage du récipient **23**,
- un circuit **34** d'air de présoufflage à basse pression comprise entre 5 et 13 bars. Ce circuit **34** comprend une source **36** de basse pression et une conduite **38** permettant d'acheminer l'air de la source **36** de basse pression à la tuyère **30** pour former le futur récipient **23** et une électrovanne **EV1**, dite électrovanne de présoufflage, permettant la mise en communication de la source **36** de basse pression avec l'intérieur de l'ébauche **2**, par la tuyère **30.** L'électrovanne **EV1** est placée sur la conduite **38** entre la source **36** de basse pression et la tuyère **30**. Le circuit **34** d'air de présoufflage comporte encore un clapet anti retour **39** évitant que du fluide venant d'une autre source ou contenu dans l'ébauche (respectivement le récipient) n'y soit introduit,
- un circuit **40** d'air de soufflage à haute pression, comprise entre 20 et 40 bars, qui comprend une source **42** de haute pression et une conduite **44** permettant d'acheminer le fluide de la source **42** de haute pression à la tuyère **30** pour former le futur récipient et une électrovanne **EV2**, dite électrovanne de soufflage, commandant la mise en communication de la source **42** de haute pression avec l'ébauche **2**. L'électrovanne **EV2** est placée sur la conduite **44** entre la source **42** de haute pression et la tuyère **30**. Le circuit **40** d'air de soufflage comporte encore un clapet anti retour **45** évitant que du fluide venant d'une autre source ou contenu dans l'ébauche (respectivement le récipient) n'y soit introduit,
- un circuit **46** de récupération de l'air de soufflage, qui comprend une conduite **50** permettant d'acheminer l'air contenu dans le récipient après sa fabrication vers des moyens **48** de récupération, tels qu'un circuit ou un réservoir de récupération, et une électrovanne **EV3**, dite électrovanne de récupération, commandant la mise en communication entre le récipient et les moyens de récupération. L'électrovanne **EV3** est placée sur la conduite **50** du circuit **46** de récupération,
- un circuit **52** de dégazage permettant de mettre en communication l'intérieur du récipient avec l'extérieur, pour la remise à la pression atmosphérique, avant la remontée de la tuyère **30** en position haute, le circuit **52** de dégazage comprenant une boucle de mise à l'atmosphère, dont une extrémité est reliée à un silencieux **54** afin d'éviter toute nuisance sonore, et l'autre, à une conduite **56** reliée à la tuyère **30**, et une électrovanne **EV4**, dite électrovanne de dégazage, commandant la mise en communication de l'air contenu dans le récipient **23** avec l'atmosphère,
- une unité **58** de contrôle électronique, notamment sous forme d'un automate programmable industriel (API), reliée électriquement au capteur **32** de pression, aux électrovannes **EV1**, **EV2**, **EV3**, **EV4** via leurs actionneurs **R1**, **R2**, **R3**, **R4**, et le cas échéant au dispositif de commande du déplacement de la tige **28**,
- une interface **68** de communication pour l'implémentation dans l'unité **58** de contrôle du programme régentant son fonctionnement.

Avantageusement, l'unité **58** de contrôle comprend :
- un processeur **60**,
- un module **62** d'entrée analogique relié au capteur **32** de pression pour en recueillir les mesures et les convertir en signal numérique en vue de leur traitement par le processeur,
- une mémoire **64** reliée au processeur pour le stockage de données issues du capteur **32** de pression (après conversion),
- un module **66** de sortie analogique commandé par le processeur **60**, et contrôlant les électrovannes **EV1**, **EV2**, **EV3**, **EV4** via leurs actionneurs **R1**, **R2**, **R3**, **R4** de manière à moduler l'ouverture et la fermeture pour faire varier le débit de fluide fourni à la tuyère **30**, et le cas échéant le dispositif de commande de déplacement axial de la tige **28**.

L'ouverture et/ou la fermeture des électrovannes **EV1**, **EV2**, **EV3**, **EV4** est réalisée par l'intermédiaire d'actionneurs **R1**, **R2**, **R3**, **R4** respectifs tels que des électroaimants.

Pour la réalisation concrète de la tuyère **30** et l'intégration des électrovannes, on pourra se référer à la demande FR 2 872 082 ou à son équivalent international WO 2006/008380.

On décrit ci-après le procédé de fabrication d'un récipient tel qu'une bouteille par étirage soufflage.

Les préformes ou ébauches **2** entrent dans le four **10**, montées sur le convoyeur qui effectue un trajet en forme de U. Elles sont chauffées au défilé par les émetteurs **16**.

Les préformes **2** chaudes sortant du four **10**, sont introduites successivement dans les moules **26** du poste **22** de soufflage grâce à un premier dispositif **18** de transfert précité, bien connu de l'homme du métier.

Une fois le moule **26** fermé, la tuyère **30** vient coiffer l'ébauche **2** avant que le fluide de soufflage, qui est généralement de l'air, ne soit introduit dans l'ébauche **2**.

Au fur et à mesure que se déroule le procédé de soufflage du récipient, la pression régnant dans la tuyère **30** est mesurée en continu par le capteur **32** de pression et est transmise à l'unité **58** de contrôle afin d'obtenir une courbe de l'évolution de la pression en fonction du temps.

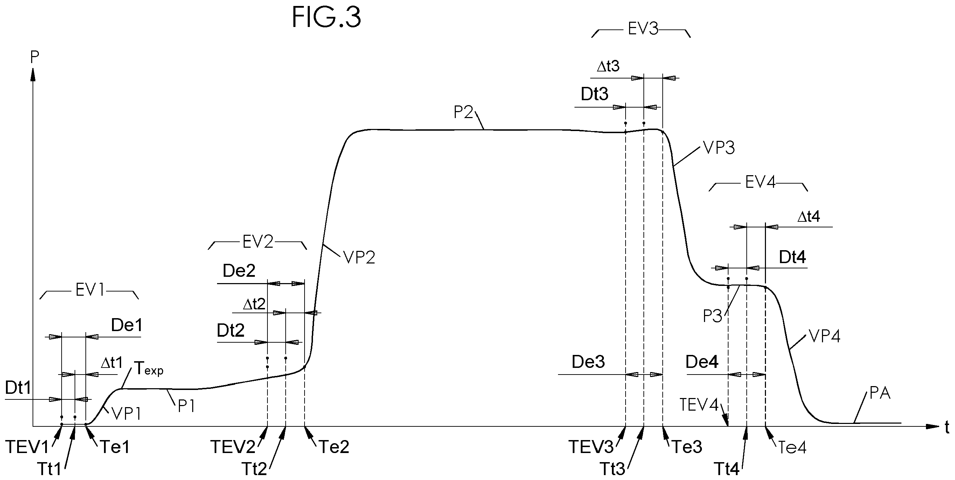

La figure 3 représente une courbe illustrant l'évolution de la pression dans l'ébauche lors des différentes étapes de l'opération de formage du futur récipient **23**.

Sur cette figure, le temps en millisecondes apparaît sur l'axe des abscisses et l'évolution de la pression, en bars, sur l'axe des ordonnées.

Sur cette figure :
- l'instant **Te1** constitue l'instant effectif d'ouverture de l'électrovanne **EV1** de présoufflage. Il est suivi d'une variation **VP1** de pression, consistant en une augmentation rapide de la pression dans l'ébauche **2**, jusqu'à atteindre la pression de présoufflage, lorsque le fluide commence à déformer l'ébauche **2**, variation **VP1** qui est elle-même suivie d'une montée atténuée, assimilable à un palier **P1**. Ces phénomènes, bien connus, sont dus au comportement de l'ébauche lors de sa déformation initiale pendant la phase de présoufflage (accompagnée usuellement de l'élongation mécanique) ;
- l'instant **Te2** constitue l'instant effectif d'ouverture de l'électrovanne **EV2** de soufflage. Il précède l'étape de soufflage. Cette étape comporte deux phases, respectivement une phase avec variation **VP2** de pression positive à l'intérieur de l'ébauche, qui correspond à la prise d'empreinte du récipient, suivie d'un palier **P2** de pression, consécutif à la fin du formage du récipient et permettant un maintien du récipient au contact des parois du moule **26** afin d'assurer une bonne prise d'empreinte ;
- l'instant **Te3** constitue l'instant effectif d'ouverture de l'électrovanne **EV3** de récupération. Il est suivi par une décroissance rapide de pression (variation **VP3**), jusqu'à atteindre un palier **P3** de stabilisation, qui correspond à un stade ou les circuits de récupération ont atteint un niveau nominal de pression ;
- l'instant **Te4** constitue l'instant effectif d'ouverture de l'électrovanne **EV4** de dégazage. Il est suivi par une décroissance **VP4** rapide de pression jusqu'à atteindre la pression atmosphérique **PA** dans le récipient.

Le délai effectif **De1**, **De2**, **De3**, **De4** d'ouverture d'une électrovanne, c'est-à-dire le temps qui s'écoule entre l'instant **TEV1**, **TEV2**, **TEV3**, **TEV4** (encore appelé "top d'ouverture" dans la suite de la description) où un ordre d'ouverture est envoyé à une électrovanne et l'instant où l'électrovanne s'ouvre effectivement, a tendance à évoluer en fonction de certains paramètres, tels que, par exemple, l'âge de l'électrovanne **EV1**, **EV2**, **EV3**, **EV4**, le nombre de cycles auquel elle est soumise, l'usure de certains de ses constituants. Ce délai peut s'accroître ou se réduire.

Lorsqu'une électrovanne **EV1**, **EV2**, **EV3**, **EV4** sort de fabrication, elle possède un délai théorique **Dt1**, **Dt2**, **Dt3**, **Dt4** d'ouverture, qui constitue le temps qui doit s'écouler entre le top d'ouverture et l'instant où l'électrovanne s'ouvre effectivement. Il s'agit d'une constante connue, admise en fonction de certaines tolérances.

Toutefois, s'il n'est pas fourni par le constructeur, des essais au moment du rodage de la machine, avant le commencement de la production, permettent de mesurer le temps que l'électrovanne met pour s'ouvrir lorsqu'elle est neuve. Ce temps initial mesuré devient le délai théorique.

La constance de ce paramètre est essentielle pour le bon fonctionnement de la machine et la parfaite reproductibilité du procédé de fabrication de récipients dans le but d'obtenir une bonne qualité de récipients.

La partie gauche de la figure 3 représente l'évolution de la pression dans l'ébauche lors des étapes de présoufflage et de soufflage et la façon dont l'invention est mise en oeuvre lors de ces étapes.

A l'instant **TEV1**, l'unité **58** de contrôle donne un ordre d'ouverture de l'électrovanne **EV1** de présoufflage. Cet instant est dénommé top d'ouverture. L'ouverture permet de mettre en communication le circuit d'air de basse pression avec l'intérieur de l'ébauche.

En pratique, entre l'instant **TEV1** où l'ordre d'ouverture de l'électrovanne est donné et l'instant effectif **Te1** d'ouverture de l'électrovanne **EV1**, il s'écoule un certain temps appelé délai effectif **De1** d'ouverture.

Ce délai effectif **De1** d'ouverture est calculé afin de mettre en évidence un éventuel écart avec un délai théorique **Dt1** d'ouverture, qui est le délai devant normalement s'écouler entre le top d'ouverture **TEV1** et l'instant théorique **Tt1** d'ouverture (encore appelé instant optimal).

Ce calcul du délai effectif **De1** d'ouverture peut s'effectuer de différentes façons, identiques pour toutes les électrovannes de la machine.

Dans une première mise en oeuvre, ce délai effectif **De1** est calculé par l'unité **58** de contrôle en analysant la courbe de pression. A cet effet, l'unité **58** contrôle en permanence la pression régnant dans l'ébauche, grâce au capteur **32** de pression débouchant dans la tuyère **30.** Après que le top d'ouverture **TEV1** ait été donné, l'unité **58** de contrôle détecte grâce au signal du capteur **32** de pression la survenue de la variation de pression **VP1** consécutive à l'ouverture effective de l'électrovanne **EV1.** L'unité **58** est ainsi en mesure de déterminer l'instant effectif **Te1** (qui correspond au début de la survenance de la variation **VP1**) et de calculer le délai effectif **De1** d'ouverture à quelques millisecondes près : en effet, l'atteinte de la pression nominale de présoufflage est typiquement de l'ordre de quelques dizaines de millisecondes. Le délai effectif **De1** est celui qui s'écoule entre l'instant **TEV1** et l'instant **Te1.**

Dans une variante, la détermination de l'instant effectif **Te1** d'ouverture est effectuée par un accéléromètre monté sur l'électrovanne **EV1.** L'accéléromètre détecte par exemple la survenance d'un choc lorsque le clapet contenu dans l'électrovanne **EV1** arrive en butée.

Dans une autre variante, la détermination de l'instant effectif **Te1** d'ouverture est effectuée par un détecteur de mouvement associé au clapet ou au tiroir de commande de l'électrovanne **EV1.** La détection du commencement du mouvement correspond au début de l'ouverture

Le délai théorique **Dt1** d'ouverture est mémorisé dans l'unité **58** de contrôle.

Lorsqu'elle a déterminé l'instant effectif **Te1** d'ouverture et donc le délai effectif **De1** d'ouverture, l'unité **58** de contrôle calcule la différence Δ**t1** entre le délai effectif **De1** d'ouverture et le délai théorique **Dt1** d'ouverture. En d'autres termes, elle calcule l'écart qui sépare les instants théorique **Tt1** et effectif **Te1** d'ouverture.

Si l'écart Δ**t1** calculé est supérieur à un écart maximal admissible, soit parce que l'instant effectif **Te1** survient trop tôt (ouverture trop rapide) ou trop tard (ouverture trop lente), alors l'unité **58** de contrôle émet une notification de dépassement d'écart maximal admissible.

L'écart maximal admissible est également une constante renseignée lors de la fabrication de l'électrovanne ou lors du rodage de la machine avant la mise en production de la machine.

Cette notification a pour but d'indiquer à l'opérateur que l'électrovanne **EV1** de présoufflage n'est plus capable d'assurer un fonctionnement normal, c'est-à-dire de s'ouvrir (et a priori de se refermer) dans un laps de temps qui n'ait pas d'incidence sur la qualité du futur récipient ou sur le bon fonctionnement global de la machine.

Elle peut prendre différente formes : une sirène, un signal lumineux, une indication sur le poste de commande de la machine, un mode dégradé de la machine, un arrêt du poste défectueux...

Après l'instant **Te1**, l'électrovanne **EV1** de présoufflage est ouverte, l'ébauche est en communication avec le circuit d'air de présoufflage. Selon les applications, la tige **28** d'étirage est actionnée simultanément, de façon à étirer la matière de l'ébauche suivant l'axe **X**.

A l'instant **Texp** débute une phase d'expansion essentiellement radiale de l'ébauche. On note à partir de ce point, un palier, voire une légère décroissance de pression due à l'expansion radiale qui est fonction du seuil d'écoulement plastique. Puis, une nouvelle légère augmentation de la pression jusqu'à ce que la tige **28** d'élongation touche le fond de moule.

A l'instant **TEV2**, l'unité **58** de contrôle donne un ordre de fermeture de l'électrovanne **EV1** de présoufflage et un top d'ouverture de l'électrovanne **EV2** de soufflage, afin de provoquer l'ouverture de l'électrovanne **EV2** de soufflage et de mettre en communication l'intérieur de l'ébauche avec le circuit d'air de haute pression. L'électrovanne **EV2** de soufflage s'ouvre à un instant effectif **Te2**, à partir duquel, comme montré sur la courbe, la pression croit fortement (portion **VP2**) jusqu'à un palier de stabilisation (palier **P2**).

Il est à noter à ce stade que le délai effectif de fermeture de l'électrovanne **EV1** de présoufflage importe peu, en raison de la présence du clapet **39** anti retour dans le circuit **34** de présoufflage. Ce clapet **39** anti retour assure que, si l'électrovanne **EV1** de présoufflage ne se ferme pas assez vite, alors, du fait du différentiel de pression, la pression exercée par le fluide haute pression vient refermer immédiatement le clapet **39** anti retour et empêche ainsi que le fluide basse pression ne continue à circuler. Ce clapet **39** anti retour empêche par ailleurs que du fluide haute pression ne soit dirigé vers le circuit **34** de présoufflage à basse pression.

Le calcul du délai effectif **De2** d'ouverture de l'électrovanne **EV2** de soufflage et le calcul de l'écart Δ**t2** peuvent s'effectuer de la même manière que pour l'électrovanne **EV1** de présoufflage.

Ainsi, dans une mise en oeuvre, l'unité **58** contrôle les variations de pression régnant dans l'ébauche. Quand l'unité **58** de contrôle a détecté la survenance de la variation de pression **VP2** (grâce au signal du capteur **32** de pression) consécutive à l'ouverture effective de l'électrovanne **EV2** de soufflage après l'ordre d'ouverture de l'électrovanne **EV2** de soufflage, alors elle est donc en mesure de déterminer l'instant effectif **Te2** et de calculer le délai effectif **De2** d'ouverture à quelques millisecondes près : en effet, l'atteinte de la pression nominale de soufflage est aussi typiquement de l'ordre de quelques dizaines de millisecondes. Le délai effectif **De2** est celui qui s'écoule entre l'instant **TEV2** et l'instant **Te2**.

Dans une variante, la détermination de l'instant effectif **Te2** d'ouverture est effectuée par un accéléromètre monté sur l'électrovanne **EV2** de soufflage. L'accéléromètre détecte la survenance d'un choc lorsque le clapet contenu dans l'électrovanne **EV2** de soufflage arrive en butée.

Dans une autre variante, la détermination de l'instant effectif **Te2** d'ouverture est effectuée par un détecteur de mouvement associé au clapet ou au tiroir de commande de l'électrovanne **EV2** de soufflage.

Après qu'elle ait déterminé l'instant **Te2** effectif d'ouverture de l'électrovanne **EV2** de soufflage, l'unité **58** de contrôle effectue des calculs similaires à ceux effectués précédemment pour l'électrovanne **EV1** de présoufflage, afin de déterminer si l'écart Δ**t2** entre ses délais effectif **De2** d'ouverture et théorique **Dt2** d'ouverture est supérieur ou inférieur à un écart maximum admissible.

Si l'écart Δ**t2** calculé est supérieur à un écart maximal admissible, soit parce que l'instant effectif **Te2** survient trop tôt (ouverture trop rapide) ou trop tard (ouverture trop lente), alors l'unité **58** de contrôle émet une notification de dépassement d'écart maximal admissible.

La partie droite de la figure 3 représente l'évolution temporelle de la pression dans l'ébauche lors des étapes de récupération et de dégazage.

Le fonctionnement de l'électrovanne **EV3** de récupération et de l'électrovanne **EV4** de dégazage de même que la gestion de leurs délais et écarts sont largement comparables à ce qui se passe pour les électrovannes **EV1**, **EV2** de présoufflage et de soufflage.

Ainsi, à un instant **TEV3** prédéterminé, l'unité **58** de contrôle donne un ordre de fermeture de l'électrovanne **EV2** de soufflage et un ordre d'ouverture (top d'ouverture) de l'électrovanne **EV3** de récupération. L'ouverture de l'électrovanne **EV3** de récupération permet de mettre en communication l'intérieur du corps creux contenu dans le moule **26** (il s'agit maintenant du récipient **23** formé) avec le circuit **46** de récupération. Ce circuit **46** de récupération, bien connu de l'homme de l'art, permet de récupérer de l'air se situant à l'intérieur du récipient soufflé et de s'en servir pour une autre fonction telle que le vérinage ou l'alimentation en air d'une autre étape du procédé de formage.

Il est à noter à ce stade que le délai effectif de fermeture de l'électrovanne **EV2** de soufflage importe peu, dans la mesure où, au pire si elle se fermait un peu tardivement (c'est-à-dire avec quelques millisecondes de retard) un peu d'air haute pression fuirait vers le circuit **46** de récupération et ne serait donc pas complètement perdu.

Comme pour les autres électrovannes, la mesure du délai effectif **De3** d'ouverture de l'électrovanne **EV3** de récupération peut s'effectuer en analysant la courbe de pression. Après que le top ait été donné à l'instant **TEV3**, l'unité **58** de contrôle détecte (grâce au signal du capteur **32** de pression) la survenue de la variation de pression **VP3**, constituée par la diminution brusque de pression consécutive à l'ouverture effective de l'électrovanne **EV3** de récupération. L'unité **58** de contrôle est ainsi en mesure de déterminer l'instant effectif **Te3** d'ouverture et de calculer le délai effectif **De3** d'ouverture à quelques millisecondes près : en effet, la récupération s'amorce en quelques dizaines de millisecondes. Le délai effectif **De3** est celui qui s'écoule entre l'instant **TV3** et l'instant effectif **Te3** d'ouverture.

Dans une variante, la détermination de l'instant **Te3** effectif d'ouverture est effectuée par un accéléromètre monté sur l'électrovanne **EV3** de récupération. L'accéléromètre détecte la survenance d'un choc lorsque le clapet contenu dans l'électrovanne arrive en butée.

Dans une autre variante, la détermination de l'instant effectif **Te3** d'ouverture est effectuée par un détecteur de mouvement associé au clapet ou au tiroir de commande de l'électrovanne **EV3** de récupération.

A partir de l'instant effectif **Te3**, l'électrovanne **EV3** de récupération est ouverte de sorte que débute la phase de récupération de l'air se trouvant dans le récipient. La récupération peut être effectuée, de façon connue, dans un réservoir **48**, par exemple.

L'unité **58** de contrôle effectue les mêmes opérations que celles effectuées pour les électrovannes **EV1**, **EV2** de présoufflage ou de soufflage, mais cette fois-ci avec l'électrovanne **EV3** de récupération, pour déterminer l'écart Δ**t3** entre l'instant effectif **Te3** d'ouverture et l'instant théorique **Tt3** d'ouverture pour l'électrovanne **EV3** de récupération.

Après qu'elle ait déterminé l'instant effectif **Te3** d'ouverture de l'électrovanne **EV3** de récupération, l'unité **58** de contrôle effectue des calculs similaires à ceux effectuées précédemment pour l'électrovanne **EV1** de présoufflage, afin de déterminer si l'écart Δ**t3** entre ses délais effectifs **De3** d'ouverture et théorique **Dt3** d'ouverture est supérieur ou inférieur à un écart maximum admissible.

Si l'écart Δ**t3** calculé est supérieur à un écart maximal admissible, soit parce que l'instant effectif **Te3** survient trop tôt (ouverture trop rapide) ou trop tard (ouverture trop lente), alors l'unité **58** de contrôle émet une notification de dépassement d'écart maximal admissible.

A l'instant **TEV4**, l'unité **58** de contrôle donne un ordre de fermeture de l'électrovanne **EV3** de récupération et un ordre d'ouverture de l'électrovanne **EV4** de dégazage. Cet instant est dénommé top d'ouverture. L'ouverture de l'électrovanne **EV4** de dégazage, à l'instant effectif **Te4**, permet de mettre en communication l'intérieur du récipient avec l'air libre par l'intermédiaire d'un silencieux.

Comme vu précédemment, la mesure du délai effectif **De4** d'ouverture peut s'effectuer en analysant, grâce à la mesure du capteur, la chute de pression **VP4** qui suit l'ouverture de l'électrovanne **EV4** de dégazage, ou bien encore à l'aide du signal émis par un accéléromètre ou par détection du mouvement du clapet ou d'un organe de commande de l'électrovanne **EV4** de dégazage.

A partir de l'instant effectif **Te4**, l'électrovanne **EV4** de dégazage est ouverte et débute alors la phase de dégazage de l'air se trouvant dans l'ébauche. On note qu'à partir de ce point, il y a une chute de pression due à l'évacuation de l'air dans l'ébauche pour atteindre l'équilibre avec la pression atmosphérique.

L'unité **58** de contrôle effectue la même opération que celles effectuées précédemment, mais cette fois-ci avec l'électrovanne **EV4** de dégazage, pour déterminer l'écart Δ**t4** entre son délai effectif **De4** d'ouverture et le délai théorique **Dt4** d'ouverture.

Si l'écart Δ**t4** calculé est supérieur à un écart maximal admissible, soit parce que l'instant effectif **Te4** survient trop tôt (ouverture trop rapide) ou trop tard (ouverture trop lente), alors l'unité **58** de contrôle émet une notification de dépassement d'écart maximal admissible.

Dans la partie de description qui précède, il a été indiqué qu'une notification de dépassement d'écart maximal admissible est effectuée dès que survient, pour une électrovanne **EV1**, **EV2**, **EV3**, **EV4**, un écart Δ**t1**, Δ**t2**, Δ**t3**, A**t4** calculé supérieur à un écart maximum admissible. Toutefois, cette façon d'agir peut être à l'origine de manoeuvres de maintenance injustifiées. Il peut en effet survenir des écarts ponctuels qui ne sont pas forcément liés à une détérioration ou autre événement non souhaité.

C'est pourquoi, dans une mise en oeuvre, l'unité **58** de contrôle est agencée pour mémoriser lors de la fabrication des récipients une pluralité d'écarts Δ**t1**, Δ**t2**, Δ**t3**, Δ**t4** calculés pour chaque électrovanne **EV1**, **EV2**, **EV3**, **EV4**, afin de déterminer s'il existe une récurrence de dépassements d'écart maximal admissible sur une électrovanne donnée et d'émettre la notification de dépassement. De préférence, dans ce cas, il convient d'émettre la notification dès que le nombre d'écarts successifs dépassant l'écart maximal admissible atteint une valeur prédéterminée, afin d'éviter d'aboutir à trop de récipients défectueux. A titre d'exemple, la notification peut-être émise dès qu'une dizaine d'écarts successifs sur une électrovanne dépassent la valeur maximale admissible.

Dans une variante, l'unité **58** de contrôle est programmée pour mémoriser les écarts Δ**t1**, Δ**t2**, Δ**t3**, Δ**t4** successifs d'une électrovanne **EV1**, **EV2**, **EV3**, **EV4** de la machine **1** et en calculer la moyenne puis, si la moyenne calculée est supérieure à un écart maximal admissible, émettre une notification de dépassement d'écart maximal.

D'autres opérations mathématiques que la moyenne peuvent être réalisées sur les écarts tels que le calcul d'écarts type par exemple.

Quelle que soit la mise en oeuvre, la mémorisation et/ou le calcul d'une moyenne ou d'écarts types, même s'ils ne conduisent pas à l'émission d'une notification de dépassement, dans la mesure où les écarts comptés ou calculés pour une électrovanne seraient admissibles, peuvent être toutefois utilisés pour évaluer le comportement futur de l'électrovanne **EV1**, **EV2**, **EV3**, **EV4**. Ainsi, par exemple, s'il apparaît que les écarts augmentent de façon à ce que leur nombre ou leur valeur se rapproche de l'écart admissible, la notification peut être anticipée.

Dans une mise en oeuvre perfectionnée, l'unité **58** de contrôle mesure par ailleurs le temps que met le fluide contenu dans le récipient pour retourner à la pression atmosphérique. Cette durée permet d'avoir une idée de l'état du silencieux. En effet, au fur et à mesure que les futurs récipients sont produits, le silencieux s'encrasse de particules par exemple par des particules de PET résiduelles. Celle-ci empêche la bonne libération de l'air et augmente ainsi le temps de l'étape de dégazage. Dés lors, l'unité **58** de contrôle effectue la même opération que celle effectuée précédemment, mais cette fois-ci avec le silencieux, pour déterminer un écart entre la fin du dégazage effectif et la fin du dégazage théorique qui est une constante renseignée par l'opérateur de la même manière que l'instant théorique d'ouverture des électrovannes.

Le procédé de fabrication qui vient d'être décrit offre divers avantages, entre autres :
- il permet de détecter la dérive des électrovannes, et ainsi d'optimiser le rendement de la machine ;
- il permet également une planification des phases de maintenance des différentes électrovannes de la machine.

## Revendications

1. Procédé de fabrication de récipients (**23**) par soufflage dans un moule d'ébauches (**2**) en matière plastique, comprenant, lors de la fabrication d'un récipient :
- une étape d'introduction d'une ébauche (**2**) dans un moule (**26**) ;
- au moins une étape de mise en communication de l'intérieur de l'ébauche (**2**) avec au moins un circuit de fluide (**34** ; **40** ; **46** ; **52**) par l'intermédiaire d'une électrovanne (**EV1** ; **EV2** ; **EV3** ; **EV4**) associée au dit circuit (**34** ; **40** ; **46** ; **52**) ;
- à un instant prédéterminé, dénommé top d'ouverture (**TEV1** ; ... ; **TEV4**) électrovanne, envoyer un ordre d'ouverture à ladite électrovanne (**EV1** ; EV**2** ; **EV3** ; **EV4**) qui possède un délai théorique (**Dt1** ; ... ; **Dt4**) d'ouverture, c'est-à dire un temps qui doit théoriquement s'écouler entre le top d'ouverture et l'instant où l'électrovanne (**EV1** ; **EV2** ; **EV3** ; **EV4**) s'ouvre effectivement ;
**caractérisé en ce qu'**il comprend des étapes consistant à :
- calculer le délai effectif (**De1** ; ... ; **De4**) d'ouverture de ladite électrovanne (**EV1** ; **EV2** ; **EV3** ; E**V**4), c'est-à-dire le temps écoulé entre le top d'ouverture et un instant effectif (**Te1** ; ... ; **Te4**) d'ouverture de l'électrovanne (**EV1** ; **EV2** ; **EV3** ; **EV4**);
- calculer un écart (Δ**t1** ; ... ; Δ**t4**) entre le délai effectif (**De1** ; ... ; **De4**) d'ouverture et le délai théorique (**Dt1** ; ... ; **Dt4**) d'ouverture ;
- si l'écart calculé est supérieur à un écart maximal admissible, émettre une notification de dépassement d'écart maximal admissible.

2. Procédé de fabrication de récipients selon la revendication 1, **caractérisé en ce que** l'instant effectif (**Te1** ; ... ; **Te4**) d'ouverture de l'électrovanne (**EV1** ; **EV2** ; **EV3** ; **EV4**) est déterminé en détectant une variation de pression (**VP1** ; ... ; **VP4**) survenant dans l'ébauche (**2**) ou le récipient en formation après que le top d'ouverture ait été donné

3. Procédé de fabrication de récipients selon la revendication 1, **caractérisé en ce que** l'instant effectif (**Te1** ; ... ; **Te4**) d'ouverture de l'électrovanne (**EV1** ; **EV2** ; **EV3** ; **EV4**) est déterminé en détectant la survenance d'un choc lorsqu'un clapet contenu dans l'électrovanne arrive en butée.

4. Procédé de fabrication de récipients selon la revendication 1, **caractérisé en ce que** l'instant effectif (**Te1** ; ... ; **Te4**) d'ouverture de l'électrovanne (**EV1** ; **EV2** ; **EV3** ; **EV4**) est déterminé en détectant le mouvement d'un clapet ou d'un tiroir de commande de l'électrovanne.

5. Procédé de fabrication de récipients selon l'une des revendications 1 à 4, **caractérisé en ce qu'**il comprend une étape consistant à déterminer s'il existe une récurrence de dépassements d'écart maximal admissible avant d'émettre la notification.

6. Procédé de fabrication de récipients selon l'une des revendications 1 à 4, **caractérisé en ce qu'**il comprend une étape consistant à mémoriser une pluralité d'écarts (Δ**t1** ; ... ; Δ**t4**) calculés pour ladite électrovanne (**EV1** ; **EV2** ; **EV3** ; **EV4**);
- calculer une moyenne à partir desdits écarts mémorisés ;
- si la moyenne calculée est supérieure à un écart maximal admissible, émettre ladite notification de dépassement d'écart maximal admissible.

7. Procédé de fabrication de récipients selon la revendication 1, **caractérisé en ce qu'**il comprend des étapes consistant à :
- mémoriser une pluralité d'écarts (Δ**t1** ; ... ; Δ**t4**) calculés pour une électrovanne (**EV1** ; **EV2** ; **EV3** ; **EV4**);
- calculer un écart type à partir desdits écarts mémorisés ;
- si l'écart type calculé est supérieur à un écart maximal admissible, émettre ladite notification de dépassement d'écart maximal admissible.

8. Dispositif pour la mise en oeuvre du procédé selon l'une quelconque des revendications précédentes, **caractérisé en ce qu'**il comporte au moins un moule (**26**) de soufflage, et des moyens d'introduction d'une ébauche (**2**) dans ledit moule (**26**);
- au moins un circuit (**34** ; **40** ; **46** ; **52**) de fluide comportant au moins une électrovanne (**EV1** ; **EV2** ; **EV3** ; **EV4**) pour mettre en communication l'intérieur de l'ébauche avec ledit circuit ;
- des moyens (**58** ; **R1** ; **R2** ; **R3** ; **R4**) pour envoyer un ordre d'ouverture à ladite électrovanne (**EV1** ; **EV2** ; **EV3** ; **EV4**);
- des moyens (**58**) de détection de l'instant effectif d'ouverture de l'électrovanne (**EV1** ; **EV2** ; **EV3** ; **EV4**);
- des moyens de calcul d'un écart entre l'instant effectif d'ouverture et un instant théorique d'ouverture ;
- des moyens (**58**) d'émission d'une notification de dépassement d'écart maximal admissible si l'écart calculé est supérieur à un écart maximal admissible.

9. Dispositif selon la revendication 8, **caractérisé en ce qu'**il comporte au moins un circuit (**34**) de présoufflage relié à au moins un moule (**26**) par au moins une électrovanne (**EV1**) de présoufflage et/ou au moins un circuit (**40**) de soufflage relié à au moins un moule (**26**) par au moins une électrovanne (**EV2**) de soufflage et/ou au moins un circuit (**42**) de récupération relié à au moins un moule (**26**) par au moins une électrovanne (**EV3**) de récupération et/ou au moins un circuit (**46**) de dégazage relié à au moins un moule (**26**) par au moins une électrovanne (**EV4**) de dégazage.

## Patentansprüche

1. Verfahren zur Herstellung von Behältern (23) durch Blasen von Vorformlingen (2) aus Kunststoff in einem Formwerkzeug, umfassend bei der Herstellung eines Behälters:
- einen Schritt des Einführens eines Vorformlings (2) in ein Formwerkzeug (26);
- mindestens einen Schritt des Inverbindungbringens des Innenraums des Vorformlings (2) mit mindestens einem Fluidkreislauf (34; 40; 46; 52) mittels eines Magnetventils (EV1; EV2; EV3; EV4), das zu dem Kreislauf (34; 40; 46; 52) gehört;
- zu einem vorgegebenen Zeitpunkt, der Magnetventil-Öffnungsimpuls (TEV1; ...; TEV4) genannt wird, Senden eines Öffnungsbefehls an das Magnetventil (EV1; EV2; EV3; EV4), das eine theoretische Öffnungsverzögerung (Dt1; ...; Dt4) besitzt, d. h. eine Zeit, die theoretisch zwischen dem Öffnungsimpuls und dem Zeitpunkt, zu dem sich das Magnetventil (EV1; EV2; EV3; EV4) tatsächlich öffnet, verstreichen muss;
**dadurch gekennzeichnet, dass** es Schritte umfasst, die darin bestehen:
- die tatsächliche Öffnungsverzögerung (De1; ...; De4) des Magnetventils (EV1; EV2; EV3; EV4) zu berechnen, d. h. die Zeit, die zwischen dem Öffnungsimpuls und einem tatsächlichen Öffnungszeitpunkt (Te1; ...; Te4) des Magnetventils (EV1; EV2; EV3; EV4) verstrichen ist;
- eine Abweichung (Δt1; ...; Δt4) zwischen der tatsächlichen Öffnungsverzögerung (De1; ...; De4) und der theoretischen Öffnungsverzögerung (Dt1; ...; Dt4) zu berechnen;
- eine Benachrichtigung des Überschreitens der höchstzulässigen Abweichung zu senden, wenn die berechnete Abweichung größer als eine höchstzulässige Abweichung ist.

2. Verfahren zur Herstellung von Behältern nach Anspruch 1, **dadurch gekennzeichnet, dass** der tatsächliche Öffnungszeitpunkt (Te1; ...; Te4) des Magnetventils (EV1; EV2; EV3; EV4) bestimmt wird, indem eine Druckänderung (VP1; ...; VP4) detektiert wird, die in dem Vorformling (2) oder dem in Formung befindlichen Behälter eintritt, nachdem der Öffnungsimpuls gegeben wurde.

3. Verfahren zur Herstellung von Behältern nach Anspruch 1, **dadurch gekennzeichnet, dass** der tatsächliche Öffnungszeitpunkt (Te1; ...; Te4) des Magnetventils (EV1; EV2; EV3; EV4) bestimmt wird, indem das Eintreten eines Stoßes detektiert wird, wenn eine im Magnetventil enthaltene Klappe den Anschlag erreicht.

4. Verfahren zur Herstellung von Behältern nach Anspruch 1, **dadurch gekennzeichnet, dass** der tatsächliche Öffnungszeitpunkt (Te1; ...; Te4) des Magnetventils (EV1; EV2; EV3; EV4) bestimmt wird, indem die Bewegung einer Klappe oder eines Steuerschiebers des Magnetventils detektiert wird.

5. Verfahren zur Herstellung von Behältern nach einem der Ansprüche 1 bis 4, **dadurch gekennzeichnet, dass** es einen Schritt umfasst, der darin besteht zu bestimmen, ob eine Wiederholung von Überschreitungen der höchstzulässigen Abweichung vorliegt, bevor die Benachrichtigung gesendet wird.

6. Verfahren zur Herstellung von Behältern nach einem der Ansprüche 1 bis 4, **dadurch gekennzeichnet, dass** es einen Schritt umfasst, der darin besteht, eine Vielzahl von Abweichungen (Δt1; ...; Δt4) zu speichern, die für das Magnetventil (EV1; EV2; EV3; EV4) gespeichert wurden;
- einen Mittelwert anhand der gespeicherten Abweichungen zu berechnen;
- die Benachrichtigung des Überschreitens der höchstzulässigen Abweichung zu senden, wenn der berechnete Mittelwert größer als eine höchstzulässige Abweichung ist.

7. Verfahren zur Herstellung von Behältern nach Anspruch 1, **dadurch gekennzeichnet, dass** es Schritte umfasst, die darin bestehen:
- eine Vielzahl von Abweichungen (Δt1; ...; Δt4) zu speichern, die für ein Magnetventil (EV1; EV2; EV3; EV4) berechnet wurden;
- eine Standardabweichung anhand der gespeicherten Abweichungen zu berechnen;
- die Benachrichtigung des Überschreitens der höchstzulässigen Abweichung zu senden, wenn die berechnete Standardabweichung größer als eine höchstzulässige Abweichung ist.

8. Vorrichtung zur Umsetzung des Verfahrens nach einem der vorhergehenden Ansprüche, **dadurch gekennzeichnet, dass** sie mindestens ein Blasformwerkzeug (26) umfasst und Mittel zum Einführen eines Vorformlings (2) in das Formwerkzeug (26);
- mindestens einen Fluidkreislauf (34; 40; 46; 52), der mindestens ein Magnetventil (EV1; EV2; EV3; EV4) umfasst, um den Innenraum des Vorformlings mit dem Kreislauf in Verbindung zu bringen;
- Mittel (58; R1; R2; R3; R4) zum Senden eines Öffnungsbefehls an das Magnetventil (EV1; EV2; EV3; EV4);
- Mittel (58) zum Detektieren des tatsächlichen Öffnungszeitpunkts des Magnetventils (EV1; EV2; EV3; EV4);
- Mittel zum Berechnen einer Abweichung zwischen dem tatsächlichen Öffnungszeitpunkt und einem theoretischen Öffnungszeitpunkt;
- Mittel (58) zum Senden einer Benachrichtigung des Überschreitens der höchstzulässigen Abweichung, wenn die berechnete Abweichung größer als eine höchstzulässige Abweichung ist.

9. Vorrichtung nach Anspruch 8, **dadurch gekennzeichnet, dass** sie mindestens einen Vorblaskreislauf (34), der mit mindestens einem Formwerkzeug (26) über mindestens ein Vorblasmagnetventil (EV1) verbunden ist, und/oder mindestens einen Blaskreislauf (40), der mit mindestens einem Formwerkzeug (26) über mindestens ein Blas-Magnetventil (EV2) verbunden ist, und/oder mindestens einen Rückgewinnungskreislauf (42), der mit mindestens einem Formwerkzeug (26) über mindestens ein Rückgewinnungsmagnetventil (EV3) verbunden ist, und/oder mindestens einen Entlüftungskreislauf (46), der mit mindestens einem Formwerkzeug (26) über mindestens ein Entlüftungsmagnetventil (EV4) verbunden ist, umfasst.

## Claims

1. Method for manufacturing containers (**23**) by blow moulding in a blank mould (**2**) made of plastic, comprising, during the manufacture of a container:
- a step of inserting a blank (**2**) into a mould (**26**) ;
- at least one step of placing the interior of the blank (**2**) into communication with at least one fluidic circuit (**34**; **40**; **46**; **52**) by way of a solenoid valve (**EV1**; **EV2**; **EV3**; **EV4**) associated with said circuit (**34**; **40**; **46**; **52**);
- at a preset point in time, called the solenoid-valve opening pip (**TEV1**;...; **TEV4**), sending a command to open to said solenoid valve (**EV1**; **EV2**; **EV3**; **EV4**), which possesses a theoretical opening delay (**Dt1**;...; **Dt4**), i.e. the time that should theoretically pass between the opening pip and the point in time at which the solenoid valve (**EV1**; **EV2**; **EV3**; **EV4**) actually opens;
**characterized in that** it comprises steps consisting in:
- calculating the actual opening delay (**De1**;...; **De4**) of said solenoid valve (**EV1**; **EV2**; **EV3**; **EV4**), i.e. the time passed between the opening pip and the actual point in time (**Te1**;...; **Te4**) at which the solenoid valve (**EV1**; **EV2**; **EV3**; **EV4**) opens;
- calculating a deviation (**Δt1**;...; **Δt4**) between the actual opening delay (**De1**;...; **De4**) and the theoretical opening delay (**Dt1**;...; **Dt4**); and
- if the calculated deviation is larger than a maximum acceptable deviation, generating a notification that the maximum acceptable deviation has been exceeded.

2. Method for manufacturing containers according to Claim 1, **characterized in that** the actual point in time (**Te1**;...; **Te4**) at which the solenoid valve (**EV1**; **EV2**; **EV3**; **EV4**) opens is determined by detecting a pressure variation (**VP1**;...; **VP4**) in the blank (**2**) or in the container in the process of being formed, after the opening pip has been given.

3. Method for manufacturing containers according to Claim 1, **characterized in that** the actual point in time (**Te1**;...; **Te4**) at which the solenoid valve (**EV1**; **EV2**; **EV3**; **EV4**) opens is determined by detecting the occurrence of a shock when a plunger contained in the solenoid valve arrives in abutment.

4. Method for manufacturing containers according to Claim 1, **characterized in that** the actual time (**Te1**;...; **Te4**) at which the solenoid valve (**EV1**; **EV2**; **EV3**; **EV4**) opens is determined by detecting the movement of a plunger or a spool of the solenoid valve.

5. Method for manufacturing containers according to one of Claims 1 to 4, **characterized in that** it comprises a step consisting in determining whether the maximum acceptable deviation is repeatedly exceeded before generating the notification.

6. Method for manufacturing containers according to one of Claims 1 to 4, **characterized in that** it comprises a step consisting in storing a plurality of deviations (**Δt1**;...; **Δt4**) calculated for said solenoid valve (**EV1**; **EV2**; **EV3**; **EV4**) in memory;
- calculating an average from said stored deviations; and
- if the calculated average is higher than a maximum acceptable deviation, generating said notification that the maximum acceptable deviation has been exceeded.

7. Method for manufacturing containers according to Claim 1, **characterized in that** it comprises steps consisting in:
- storing a plurality of deviations (**Δt1**;...; **Δt4**) calculated for a solenoid valve (**EV1**; **EV2**; **EV3**; **EV4**) in memory;
- calculating a standard deviation from said stored deviations; and
- if the calculated standard deviation is higher than a maximum acceptable deviation, generating said notification that the maximum acceptable deviation has been exceeded.

8. Device for implementing the method according to any one of the preceding claims, **characterized in that** it includes at least one blow-moulding mould (**26**), and means for inserting a blank (**2**) into said mould (**26**);
- at least one fluidic circuit (**34**; **40**; **46**; **52**) including at least one solenoid valve (**EV1**; **EV2**; **EV3**; **EV4**) for placing the interior of the blank into communication with said circuit;
- means (**58**; **R1**; **R2**; **R3**; **R4**) for sending a command to open to said solenoid valve (**EV1**; **EV2**; **EV3**; **EV4**);
- means (**58**) for detecting the actual time at which the solenoid valve (**EV1**; **EV2**; **EV3**; **EV4**) opens;
- means for calculating a deviation between the actual opening time and a theoretical opening time; and
- means (**58**) for generating a notification that the maximum acceptable deviation has been exceeded, if the calculated deviation is higher than a maximum acceptable deviation.

9. Device according to Claim 8, **characterized in that** it includes at least one pre-blow-moulding circuit (**34**) connected to at least one mould (**26**) by at least one pre-blow-moulding solenoid valve (**EV1**) and/or at least one blow-moulding circuit (**40**) connected to at least one mould (**26**) by at least one blow-moulding solenoid valve (**EV2**) and/or at least one recovery circuit (**42**) connected to at least one mould (**26**) by at least one recovery solenoid valve (**EV3**) and/or at least one degassing circuit (**46**) connected to at least one mould (**26**) by at least one degassing solenoid valve (**EV4**).
